# FASCICULE DE BREVET EUROPEEN

(11) **EP 2 790 932 B1**
(45) Date de publication et mention de la délivrance du brevet: **01.03.2017**
(21) Numéro de dépôt: 12809732.6
(22) Date de dépôt: 14.12.2012
(51) Int. Cl.: B60C 11/14, B60C 11/16, B60C 11/18, B60C 1/00

(54) **BANDAGE PNEUMATIQUE AVEC UNE BANDE DE ROULEMENT COMPORTANT UN FEUTRE**
REIFEN MIT EINER LAUFFLÄCHE MIT EINEM FILZ
TYRE HAVING A TREAD COMPRISING A FELT

(30) Priorité: 16.12.2011 FR 1161753
(43) Date de publication de la demande: 22.10.2014
(73) Titulaire: Compagnie Générale des Etablissements Michelin, 63000 Clermont-Ferrand (FR); Michelin Recherche et Technique S.A., 1763 Granges-Paccot (CH)
(72) Inventeur: ABAD, Vincent, F-63040 Clermont-Ferrand Cedex 9 (FR); CUSTODERO, Emmanuel, F-63040 Clermont-Ferrand Cedex 9 (FR)
(74) Mandataire: Dequire, Philippe Jean-Marie Denis
(86) Numéro de dépôt international: PCT/EP2012/075637
(87) Numéro de publication internationale: WO 2013/087882

(56) Documents cités:
- EP-A1- 1 972 223
- FR-A1- 2 348 068
- US-A- 992 052

## Description

La présente invention est relative aux pneumatiques munis d'une bande de roulement.

Un objectif constant des manufacturiers de pneumatique est d'améliorer l'adhérence des pneumatiques sur sol mouillé sans dégrader les performances des pneumatiques telles que le comportement, la résistance à l'usure et la résistance au roulement.

Pour obtenir des performances satisfaisantes en roulage notamment sur chaussée mouillée, il est connu de pourvoir une bande de roulement d'un pneumatique avec une sculpture formée par des éléments de sculpture séparés les uns des autres par des découpures (rainures de largeur moyenne supérieure ou égale à 2 mm et/ou incisions de largeur moyenne inférieure à 2 mm, ces découpures étant obtenues par exemple par moulage. Les éléments de sculpture ainsi formés comprennent une face de contact destinée à venir en contact avec la chaussée pendant le roulage et des faces latérales délimitant également les découpures ; l'intersection de chaque face latérale avec la face de contact forme une arête facilitant le contact du pneumatique avec la chaussée et notamment lorsque celle-ci est mouillée. Plus généralement, on définit une arête comme la limite géométrique de contact d'un élément de sculpture avec le sol en roulage.

Par éléments de sculpture, on distingue des éléments ne faisant pas le tour complet du pneumatique (blocs) et des éléments faisant le tour complet (nervures). Par ailleurs, les éléments de sculpture peuvent comporter une ou plusieurs incisions pour former des arêtes supplémentaires, chaque incision pouvant ou non déboucher sur au moins une face latérale de l'élément de sculpture. Par définition, une incision est l'espace délimité par deux faces principales en vis-à-vis distantes l'une de l'autre d'une largeur inférieure à 2 mm.

### Description brève de l'invention

L'invention a pour objet un pneumatique comprenant les caractéristiques de la revendication 1.

La demanderesse a découvert de façon très surprenante que la présence de tels éléments de sculpture en feutre en contact avec un sol de roulement mouillé permettent d'améliorer de façon sensible l'adhérence du pneumatique sur ce sol mouillé.

Selon un premier mode de réalisation, les éléments en feutre de la bande de roulement débouchent radialement extérieurement pour constituer une partie des faces de contact des éléments de sculpture de la bande de roulement du bandage pneumatique.

Avantageusement, les éléments en feutre peuvent constituer les faces de contact d'au moins une partie d'une nervure circonférentielle de la bande de roulement.

Selon un autre mode de réalisation, les éléments en feutre peuvent constituer les faces de contact d'au moins un ensemble d'éléments de sculpture disposés axialement.

Avantageusement, la densité apparente du feutre est supérieure à 0,15 et de préférence supérieure à 0,25. En dessous de 0,15, la cohésion du feutre devient insuffisante pour une application dans une bande de roulement de pneumatique.

L'invention concerne plus particulièrement les pneumatiques destinés à équiper des véhicules sans moteur tels que les bicyclettes, ou des véhicules à moteur de type tourisme, SUV ("Sport Utility Vehicles"), deux roues (notamment motos), avions, comme des véhicules industriels choisis parmi camionnettes, « poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

### Description détaillée de l'invention

Dans la présente description, sauf indication expresse différente, tous les pourcentages (%) indiqués sont des % en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Par « pce », on entend : partie en poids pour cent parties d'élastomère.

On entend par l'expression composition « à base de », une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa fabrication et de sa réticulation ou vulcanisation.

### Mesures et tests utilisés :

### Mesure du coefficient de frottement

Les mesures de coefficient de frottement dynamique ont été réalisées selon une méthode identique à celle décrite par L. Busse, A. Le Gal, et M. Küppel (Modelling of Dry and Wet Friction of Silica Filled Elastomers on Self-Affine Road Surfaces, Elastomere Friction, 2010, 51, p. 8). Les éprouvettes sont réalisées par moulage suivi d'une vulcanisation d'un support caoutchouteux carré (50mmx50mm) de 6 mm d'épaisseur recouvert de feutre d'épaisseur 2 mm avant cuisson. Cette épaisseur varie pendant la cuisson et atteint à titre d'exemple 1,4 mm dans le cas du feutre PLB40 de la société Laoureux. Après fermeture du moule, celui-ci est placé dans une presse à plateaux chauffants à 150°C pendant 50 minutes à une pression de 16 bars. Le sol utilisé pour réaliser ces mesures est une carotte prélevée sur un sol routier réel en béton bitumineux de type BBTM (norme NF P 98-137). Pour éviter les phénomènes de démouillage et l'apparition de forces d'adhésion parasites entre le sol et le matériau, le système sol+éprouvette est immergé dans une solution aqueuse à 5% d'un agent tensio-actif (Sinnozon - numéro CAS : 25155-30-0). La température de la solution aqueuse est régulée à l'aide d'un bain thermostatique. L'éprouvette est soumise à un mouvement de glissement en translation parallèlement au plan du sol. La vitesse de glissement Vg est fixée à 0.03 m/sec. La contrainte normale appliquée σn est de 100 kPa. Ces conditions sont décrites ci-après par « conditions de sol mouillé ». On mesure en continu la contrainte tangentielle σt opposée au mouvement de l'éprouvette sur le sol. Le rapport entre la contrainte tangentielle σₜ et la contrainte normale σₙ donne le coefficient de frottement dynamique µ. Les valeurs indiquées dans le tableau ci-dessous sont les valeurs de coefficient de frottement dynamique, obtenues en régime permanent après stabilisation de la valeur de la contrainte tangentielle σₜ.

### Feutre

Le bandage pneumatique selon l'invention a pour caractéristique essentielle de comporter une bande de roulement avec des éléments de sculpture ou des parties d'éléments de sculpture en feutre constitués de fibres choisies dans le groupe des fibres textiles, des fibres minérales et de leurs mélanges.

La présence de ces éléments en feutre permet d'améliorer de façon sensible l'adhérence du pneumatique sur un sol mouillé.

Dans ce qui suit, on entend par « feutre » ou « intissé » de fibres, tout produit manufacturé constitué d'un voile, d'une nappe ou d'un matelas de fibres, qu'elles soient réparties directionnellement ou par hasard, et dont les fibres sont enchevêtrées ou entremêlées tridimensionnellement

Les modes de fabrication de tels feutres sont bien connus, notamment par aiguilletage ou foulage.

Les fibres du feutre peuvent être choisies parmi des fibres textiles d'origine naturelle, par exemple, dans le groupe des fibres de soie, de coton, de bambou, de cellulose, de laine et de leurs mélanges.

Des exemples de feutres de laine sont les feutres « PLB » et « MLB » de la société Laoureux. Ces feutres sont commercialisés avec une densité apparente variable entre 0,20 et 0,44.

Les fibres du feutre peuvent aussi être choisies dans le groupe des fibres textiles synthétiques, par exemple de polyester, de polyamide, de carbone, d'aramide, de polyéthylène, de polypropylène, de polyacrylonitrile, de polyimide, de polysulfones, de polyéther sulfones, de polyuréthannes, d'alcool polyvinylique et leurs mélanges.

Les fibres de polyester du feutre peuvent avantageusement être choisies dans le groupe des fibres de polyéthylène téréphtalate (PET - Dacron Invista inc.), de polybutylène téréphtalate (PBT), de polyéthylène naphtalate (PEN) et de leurs mélanges.

A titre d'exemple de feutres constitués de fibres aramides, on peut citer les feutres réalisés avec des fibres de Nomex® (fibres méta-aramide : poly(m-phénylèneisophtalamide), de sigle MPD-I) de la société Du Pont de Nemours.

Les fibres du feutre peuvent encore être choisies dans le groupe des fibres minérales, par exemple des fibres de verre et de basalte.

Les feutres peuvent être indifféremment composés de plusieurs types de fibres d'un même groupe ou de groupes différents tels que précédemment décrits.

### Description des figures

Les figures annexées illustrent des modes de réalisation d'une bande de roulement de bandage pneumatique incorporant un feutre :
- la figure 1 présente une vue en coupe axiale illustrant un premier mode de réalisation d'une bande de roulement d'un bandage pneumatique incorporant un feutre ;
- la figure 2 présente un second mode de réalisation d'une bande de roulement d'un bandage pneumatique incorporant un feutre ;
- la figure 3 présente un troisième mode de réalisation d'une bande de roulement d'un bandage pneumatique incorporant un feutre ;
- la figure 4 présente un quatrième mode de réalisation d'une bande de roulement d'un bandage pneumatique incorporant un feutre ;
- la figure 5 présente, en vue de dessus et de façon très schématique, une partie de bande de roulement dont plusieurs blocs incorporent un feutre.

### Exemples de réalisation de l'invention

Sur les figures, on a représenté des axes X, Y, Z orthogonaux entre eux correspondant aux orientations habituelles circonférentielle (X), axiale (Y) et radiale (Z) d'un pneumatique.

On entend par « orientation sensiblement circonférentielle » une orientation moyenne ne s'écartant pas de plus de cinq degrés de la direction circonférentielle X.

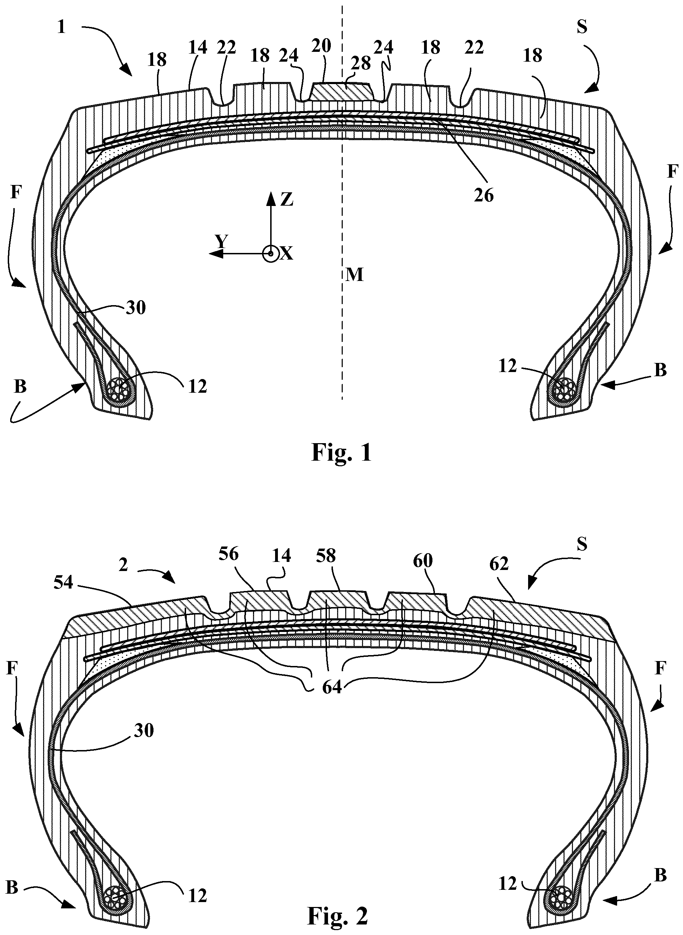

On a représenté à la figure 1 un pneumatique selon un mode de réalisation de l'invention désigné par la référence générale 1. De façon classique, le pneumatique 10 comprend un sommet S prolongé par deux flancs F et deux bourrelets B.

Deux tringles 12 sont noyées dans les bourrelets B. Les deux tringles 12 sont agencées symétriquement par rapport à un plan radial médian M du pneumatique.

Chaque tringle 12 est de révolution autour d'un axe de référence. Cet axe de référence, sensiblement parallèle à la direction Y, est sensiblement confondu avec un axe de révolution du pneumatique.

Le pneumatique 1 comprend également une armature de carcasse 30 dont les extrémités sont enroulées autour des tringles 12. L'armature de carcasse dans l'exemple représenté comprend une ou plusieurs nappes de renforts textiles orientés sensiblement radialement.

Le sommet S comprend une bande de roulement 14, munie de sculptures 18 et 20, séparées par des découpures ou rainures 22 et 24, ainsi qu'une armature de sommet 26 usuelle. Les deux rainures 24 entourent la sculpture centrale 20 qui est une nervure circonférentielle.

La partie radialement extérieure et la face de contact de la nervure circonférentielle 20 sont constituées par un feutre 28 qui s'étend circonférentiellement sur toute la périphérie de la bande de roulement du bandage pneumatique.

La figure 2 présente une coupe axiale d'un bandage pneumatique 2 similaire à celui de la figure 1 selon un autre mode de réalisation de l'invention. Dans cette coupe axiale, l'ensemble des éléments de sculptures ou blocs 54, 56, 58, 60, 62 de la bande de roulement 14 du bandage pneumatique est constitué par un feutre 64. Ce feutre s'étend axialement et circonférentiellement sur l'ensemble du sommet du bandage pneumatique. Une sous-couche caoutchouteuse (non représentée) peut être disposée entre le feutre et l'armature de sommet.

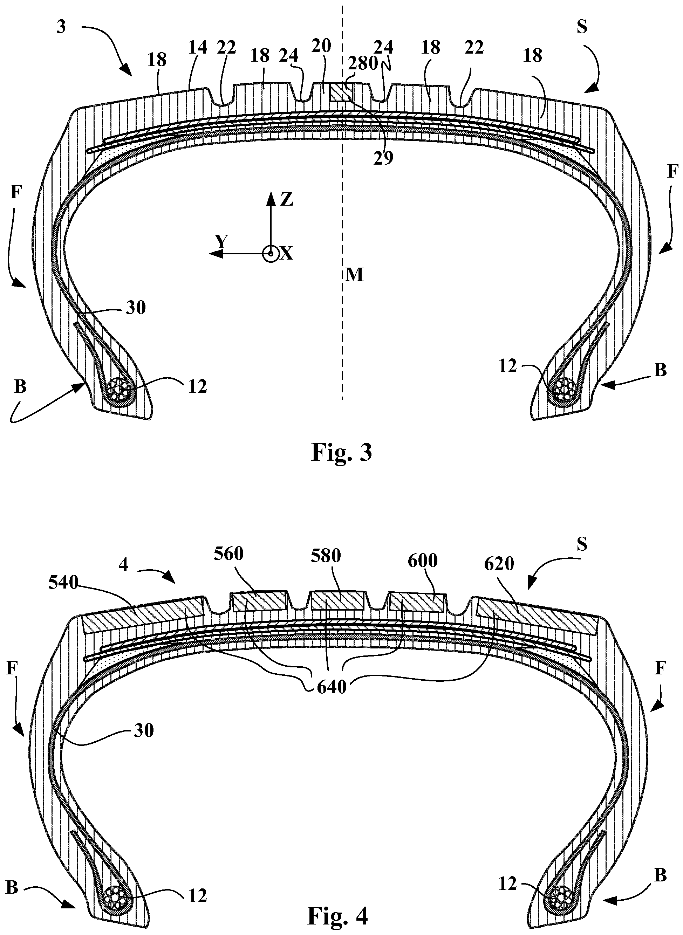

La figure 3 présente une coupe axiale d'un bandage pneumatique 3 similaire à celui de la figure 1 selon un autre mode de réalisation de l'invention. Dans ce mode de réalisation, une cavité 29 est remplie par un feutre 280. La cavité 29 s'étend circonférentiellement de façon continue ou non.

La figure 4 présente une coupe axiale d'un bandage pneumatique 4 similaire à celui de la figure 2 selon un autre mode de réalisation de l'invention. La bande de roulement de ce pneumatique 4 comporte une pluralité de cavités 540, 560, 580 ; 600 et 620 disposées dans des blocs placés axialement les uns par rapport aux autres. Chaque cavité est remplie par un feutre 640. Les cavités d'étendent circonférentiellement sur une distance comprise entre 5 et 30 mm. Le nombre de cavités dans la direction circonférentielle est de l'ordre de 10 à 20. Ce nombre est tel que dans des conditions usuelles de roulage, au moins un ensemble axial de blocs comportant des cavités avec des feutres se trouve en permanence dans l'aire de contact.

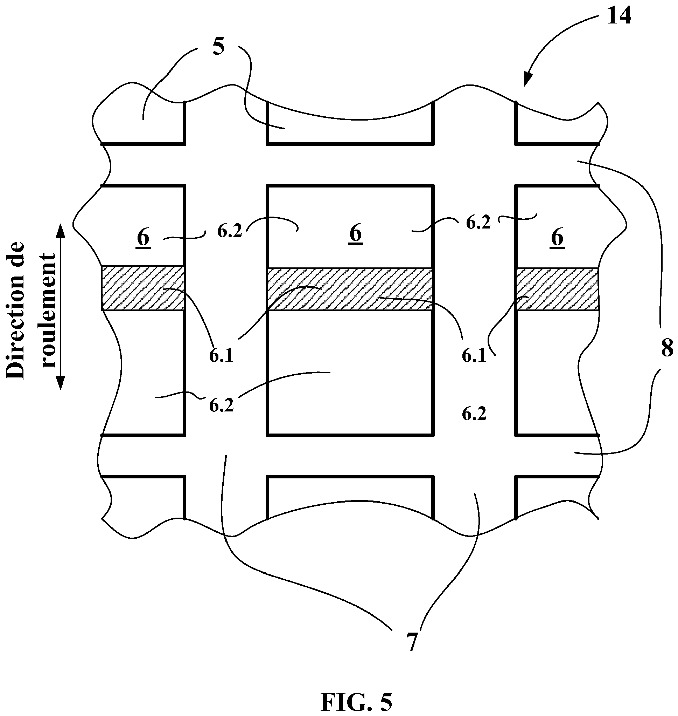

La figure 5 est une vue de dessus partielle et très schématique d'une bande de roulement selon un mode de réalisation proche de celui de la figure 4. La bande de roulement 14 comporte une surface de roulement 5 et un ensemble de blocs 6 délimités par des rainures circonférentielles 7 et axiales 8. Les blocs 6 comportent un feutre 6.2 disposé entre deux parties caoutchouteuses 6.1. Dans ce mode de réalisation et contrairement au mode de réalisation illustré à la figure 4, les feutres 6.2 constituent une partie des faces latérales des blocs 6.

Les ébauches de ces bandages pneumatiques sont réalisées de façon usuelle par empilage successif des différents éléments du bandage. Les bandes de feutre peuvent être disposées circonférentiellement ou axialement ou encore dans des cavités. Puis on met en place l'ébauche dans le moule de vulcanisation et l'on effectue classiquement le moulage de la bande de roulement lors de la fermeture du moule suivi de la vulcanisation de l'ébauche.

### Essais

Le coefficient de frottement d'éprouvettes constituées d'une part d'un mélange usuel de bande de roulement de bandage pneumatique et d'autre part de feutre de laine, de référence PLB40 de la société Laoureux, a été déterminé dans les conditions précédemment décrites. Les résultats présentés ci-dessous sont présentés en base 100 : une valeur arbitraire de 100 est donnée pour le coefficient de frottement du témoin, un résultat supérieur à 100 indiquant une meilleure performance en adhérence.

La composition du mélange témoin de bande de roulement (A) est présentée dans le tableau 1 ci-dessous.

**Tableau 1**

| Composition | A (pce) |
|---|---|
| SBR (1) | 40 |
| SBR (2) | 60 |
| Silice (3) | 90 |
| Agent de couplage (4) | 7.5 |
| Noir de carbone (5) | 4 |
| Plastifiant liquide (6) | 20 |
| Résine (7) | 20 |
| Cire anti-ozone | 1.5 |
| Agent anti-oxydant (8) | 2 |
| DPG (9) | 1.5 |
| ZnO (10) | 2.75 |
| Acide stéarique(11) | 2 |
| CBS (12) | 2.1 |
| Soufre | 1.4 |

| | |
|---|---|
| (1) SBR solution (taux exprimés en SBR sec : 41% de styrène, 24 % des motifs polybutadiène en 1-2 et 51% des motifs polybutadiène en 1-4 trans (Tg = - 25°C) ; (2) SBR solution (taux exprimés en SBR sec : 29% de styrène, 5 % des motifs polybutadiène en 1-2 et 80% des motifs polybutadiène en 1-4 trans (Tg = - 56°C) ; (3) Silice (« Zeosil 1165MP » de la société Rhodia) ; (4) agent de couplage TESTP (« Si69 » de la société Degussa) ; (5) Noir de carbone N234 ; (6) Huile TDAE « Vivatec 500 » de la société Hansen & Rosenthal ; (7) Résine C5/C9 « CrayValley Wingtack » de la société STS ; (8) N-1,3-diméthylbutyl-N-phénylparaphénylènediamine (« Santoflex 6-PPD » de la société Flexsys) ; (9) DPG = Diphénylguanidine (« Perkacit DPG » de la société Flexsys) ; (10) oxyde de zinc (grade industriel - société Umicore) ; (11) stéarine (« Pristerene » de la société Uniquema) ; (12) N-cyclohexyl-2-benzothiazyl-sulfénamide (« Santocure CBS » de la société Flexsys). | |

Les mesures du coefficient de frottement dynamique ont été réalisées dans des conditions de sol mouillé, à une vitesse de glissement de 0,03 m/s, sous une pression normale de 1 bar et à trois températures (5, 25 et 45°C). Les résultats sont présentés dans le tableau 2.

**Tableau 2**

| | | | |
|---|---|---|---|
| Température (°C) | 5 | 25 | 45 |
| Témoin | 100 | 100 | 100 |
| Feutre PLB40 | 109 | 126 | 177 |

Les résultats présentés au tableau 2 mettent en évidence que les éprouvettes constituées de feutre de laine pur permettent une amélioration notable de l'adhérence sur sol mouillé, particulièrement aux températures élevées.

Dans l'ensemble des modes de réalisation présentés, les parties des bandes de roulement en feutre peuvent ainsi être considérés comme des inserts antidérapants.

## Revendications

1. Bandage pneumatique avec une bande de roulement comportant des éléments de sculpture séparés par des découpures et comprenant des faces latérales et des faces de contact avec le sol de roulage, **caractérisé en ce qu'**au moins une partie des éléments de sculpture de la bande de roulement comporte des cavités débouchant radialement extérieurement et remplies de feutre, **en ce que** chaque cavité débouche au plus sur deux faces latérales opposées dudit élément de sculpture et **en ce que** les fibres dudit feutre sont choisies dans le groupe des fibres textiles, des fibres minérales et de leurs mélanges.

2. Bandage pneumatique selon la revendication 1, dans lequel les cavités remplies de feutre de la bande de roulement débouchent radialement extérieurement pour constituer la face de contact d'au moins une partie d'une nervure circonférentielle de la bande de roulement.

3. Bandage pneumatique selon l'une quelconque des revendications précédentes, dans lequel les éléments en feutre de la bande de roulement débouchent radialement extérieurement pour constituer les faces de contact d'au moins un ensemble d'éléments de sculpture disposés axialement.

4. Bandage pneumatique selon l'une quelconque des revendications précédentes, dans lequel les fibres du feutre sont choisies dans le groupe des fibres de soie, de coton, de cellulose, de bambou, de laine et de leurs mélanges.

5. Bandage pneumatique selon la revendication 4, dans laquelle les fibres du feutre sont des fibres de laine.

6. Bandage pneumatique selon l'une des revendications précédentes, dans lequel les fibres du feutre sont choisies dans le groupe des fibres de polyamide, d'aramide, de carbone, de polyéthylène, de polypropylène, de polyacrylonitrile, de polyimide, de polysulfones, de polyéther sulfones, de polyuréthannes, d'alcool polyvinylique, de polyester, de chlorure de polyvinyle et de leurs mélanges.

7. Bandage pneumatique selon la revendication 6, dans lequel les fibres de polyester du feutre sont choisies dans le groupe des fibres de polyéthylène téréphtalate (PET), de polybutylène téréphtalate (PBT), de polyéthylène naphtalate (PEN) et de leurs mélanges.

8. Bandage pneumatique selon l'une quelconque des revendications précédentes, dans lequel les fibres du feutre sont des fibres minérales choisies dans le groupe des fibres de verre et de basalte.

9. Bandage pneumatique selon l'une quelconque des revendications précédentes, dans lequel le feutre a une densité apparente supérieure à 0,15 et de préférence supérieure à 0,25.

## Patentansprüche

1. Luftreifen mit einer Lauffläche, umfassend Profilelemente, die durch Ausschnitte getrennt sind und Seitenflächen und Rolluntergrundkontaktflächen umfassen, **dadurch gekennzeichnet, dass** mindestens ein Teil der Profilelemente der Lauffläche Hohlräume, die sich radial nach außen öffnen und mit Filz gefüllt sind, umfasst und dass sich jeder Hohlraum höchstens auf zwei gegenüberliegenden Seitenflächen des Profilelements öffnet und dass die Fasern des Filzes aus der Gruppe Textilfasern, Mineralfasern und Mischungen davon ausgewählt sind.

2. Luftreifen nach Anspruch 1, wobei sich die mit Filz gefüllten Hohlräume der Lauffläche radial nach außen öffnen und so die Kontaktfläche mindestens eines Teils einer Umfangsrippe der Lauffläche bilden.

3. Luftreifen nach einem der vorhergehenden Ansprüche, wobei sich die Filzelemente der Lauffläche radial nach außen öffnen und so die Kontaktflächen mindestens einer Gruppe von axial angeordneten Profilelementen bilden.

4. Luftreifen nach einem der vorhergehenden Ansprüche, bei dem die Fasern des Filzes aus der Gruppe Seidenfasern, Baumwollfasern, Cellulosefasern, Bambusfasern, Wollfasern und Mischungen davon ausgewählt sind.

5. Luftreifen nach Anspruch 4, wobei es sich bei den Fasern des Filzes um Wollfasern handelt.

6. Luftreifen nach einem der vorhergehenden Ansprüche, wobei die Fasern des Filzes aus der Gruppe bestehend aus Polyamidfasern, Aramidfasern, Kohlefasern, Polyethylenfasern, Polypropylenfasern, Polyacrylnitrilfasern, Polyimidfasern, Polysulfonfasern, Polyethersulfonfasern, Polyurethanfasern, Polyvinylalkoholfasern, Polyesterfasern, Polyvinylchloridfasern und Mischungen davon ausgewählt sind.

7. Luftreifen nach Anspruch 6, bei dem die Polyesterfasern des Filzes aus der Gruppe Polyethylenterephthalatfasern (PET-Fasern), Polybutylenterephthalatfasern (PBT-Fasern), Polyethylennaphthalatfasern (PEN-Fasern) und Mischungen davon ausgewählt sind.

8. Luftreifen nach einem der vorhergehenden Ansprüche, wobei es sich bei den Fasern des Filzes um Mineralfasern aus der Gruppe Glasfasern und Basaltfasern handelt.

9. Luftreifen nach einem der vorhergehenden Ansprüche, wobei der Filz eine scheinbare Dichte von mehr als 0,15 und vorzugsweise mehr als 0,25 aufweist.

## Claims

1. Tyre with a tread pattern formed of tread pattern elements separated from one another by indentations and comprising lateral faces and contact faces intended to come into contact with the road surface, **characterized in that** at least a portion of the tread pattern elements of the tread comprises cavities emerging radially on the outside and filled with a felt, **in that** each cavity emerges at most in two opposed lateral faces of the tread pattern element and **in that** the fibres of the said felt are selected from the group of textile fibres, inorganic fibres and their mixtures.

2. Tyre according to Claim 1, in which the felt elements of the tread emerge radially on the outside to constitute the contact face of at least a portion of a circumferential rib of the tread.

3. Tyre according to either one of Claims 1 and 2, in which the felt elements of the tread emerge radially on the outside to constitute the contact faces of at least one assembly of tread pattern elements which are positioned axially.

4. Tyre according to any one of the preceding claims, in which the fibres of the felt are selected from the group of silk, cotton, cellulose, bamboo and wool fibres and their mixtures.

5. Tyre according to Claim 4, in which the fibres of the felt are wool fibres.

6. Tyre according to one of the preceding claims, in which the fibres of the felt are selected from the group of polyamide, aramid, carbon, polyethylene, polypropylene, polyacrylonitrile, polyimide, polysulphone, polyethersulphone, polyurethane, polyvinyl alcohol, polyester and polyvinyl chloride fibres and their mixtures.

7. Tyre according to Claim 6, in which the polyester fibres of the felt are selected from the group of polyethylene terephthalate (PET) fibres, polybutylene terephthalate (PBT) fibres, polyethylene naphthalate (PEN) fibres and their mixtures.

8. Tyre according to any one of the preceding claims, in which the fibres of the felt are inorganic fibres selected from the group of glass fibres and basalt fibres.

9. Tyre according to any one of the preceding claims, in which the felt has an apparent density of greater than 0.15 and preferably of greater than 0.25.
